# EUROPEAN PATENT SPECIFICATION

(11) **EP 2 163 177 B1**
(45) Date of publication and mention of the grant of the patent: **28.08.2013**
(21) Application number: 09170113.6
(22) Date of filing: 11.09.2009
(51) Int. Cl.: A47J 37/07

(54) **Appliance for barbecueing as well as combination of a barbecuestick and the appliance**
Vorrichtung zum Grillen und Kombination eines Spiesses mit einer solchen Vorrichtung
Dispositif pour griller et combination d'une brochette avec un tel dispositif

(30) Priority: 11.09.2008 NL 1035921; 02.04.2009 NL 2002697
(43) Date of publication of application: 17.03.2010
(73) Proprietor: Khatchatrian, Amaiak, 5071 GS Udenhout (NL)
(72) Inventor: Khatchatrian, Amaiak, 5071 GS Udenhout (NL)
(74) Representative: Verhees, Godefridus Josephus Maria

(56) References cited:
- WO-A-2008/064359
- WO-A1-2005/104918
- US-A- 4 555 986
- US-A- 4 896 253
- US-A- 6 047 633
- US-A1- 2006 076 789
- US-B1- 7 234 392

## Description

### Field of the invention

The invention relates to an appliance for barbecuing, comprising a barbecue stick holder, consisting of a handgrip as well as holding means connected thereto for holding the end of a barbecue stick.

### State of the art

An appliance of this type is known from US-A-6 047 633. At a barbecue party the meat is often stuck onto a wooden barbecue stick and subsequently put on the grill grate of the barbecue. The stick with the meat stuck onto it is to be turned round periodically to have the meat grilled uniformly on all sides. The barbecue stick is to be positioned well on the grate over the fire to provide that all meat is cooked well. Turning the stick round is awkward because the stick, which is located over the fire, is to be held firmly and turned round.

### Summary of the invention

It is an object of the invention to provide an appliance for barbecuing with which a barbecue stick can be turned round more easily. To this end the appliance according to the invention is characterised in that the holding means comprise a tube into which the end of a barbecue stick can be stuck, as well as a pin which can be pushed into the barbecue stick through a hole present in the tube. This enables a barbecue stick to be lengthened with a handgrip which is not held over the fire during the barbecuing, so that the barbecue stick can be turned round without any problems. The barbecue stick can thus be fastened quickly and firmly, so that the chance of the stick coming loose from the handgrip is reduced to substantially nil.

For easily pushing the pin into the barbecue stick, an embodiment of the invention is characterised in that the pin is present at an end of a lever which is rotatably connected to the tube and has a pressure face at both ends, and in that the appliance comprises a spring that cooperates with the lever and pushes it into a position in which the pin is pushed through the hole. The spring always causes the pin to be pushed into the barbecue stick, so that the barbecue stick cannot drop from the appliance unintentionally.

A further embodiment of the appliance according to the invention is **characterised in that** the appliance comprises an insert sleeve with a hole which sleeve can be inserted into the tube so that the pin can be stuck through the hole. This sleeve renders the appliance suitable for barbecue sticks of different thicknesses.

A still further embodiment of the appliance according to the invention is **characterised in that** the handgrip is elongated and hollow and is open at one end and provided with clamping means, and the appliance further includes a pin which can be moved into and out of the handgrip and can be clamped by the clamping means while the holding means are connected to the end of the pin protruding from the handgrip. This allows the distance between the handgrip and the barbecue stick to be increased and to be adapted as desired, so that the handgrip can be kept away from the fire under substantially any circumstances.

The clamping means preferably comprise a slotted adapter with lips being formed between the slots, as well as a sleeve which can be turned around these lips and can, when turned, press the lips of the adapter together.

The invention also relates to a combination of a barbecue stick and an appliance according to the invention, which is **characterised in that** the barbecue stick is made of metal and can be clamped in the handgrip by the clamping means or can be inserted into the tube and has a hole the pin can be pushed through.

In an embodiment of the combination the metal barbecue stick is hook-shaped so that it can be stuck transversely through a sausage in lieu of being stuck through the sausage in longitudinal direction.

In another embodiment of the combination the metal barbecue stick has a grid with protruding pins to which for example hamburgers can be pinned down.

### Brief description of the drawings

The invention will now be described in more detail below based on examples of embodiment of the appliance for barbecuing and the combination of the appliance and a barbecue stick according to the invention, while reference is made to the appended drawing figures, in which:
Fig. 1 shows an embodiment of the appliance according to the invention;
Fig. 2 shows in detail the appliance shown in Fig. 1;
Fig. 3 shows a thin metal barbecue stick for the appliance;
Fig. 4 shows a thick metal barbecue stick;
Fig. 5 shows a metal barbecue stick provided with a grid and protruding pins;
Fig. 6 shows a hook-shaped metal barbecue stick;
Fig. 7 shows a combination of the barbecue stick shown in Fig. 6 and the appliance shown in Fig. 1; and
Fig. 8 shows the appliance when in use during barbecuing.

### Detailed description of the drawings.

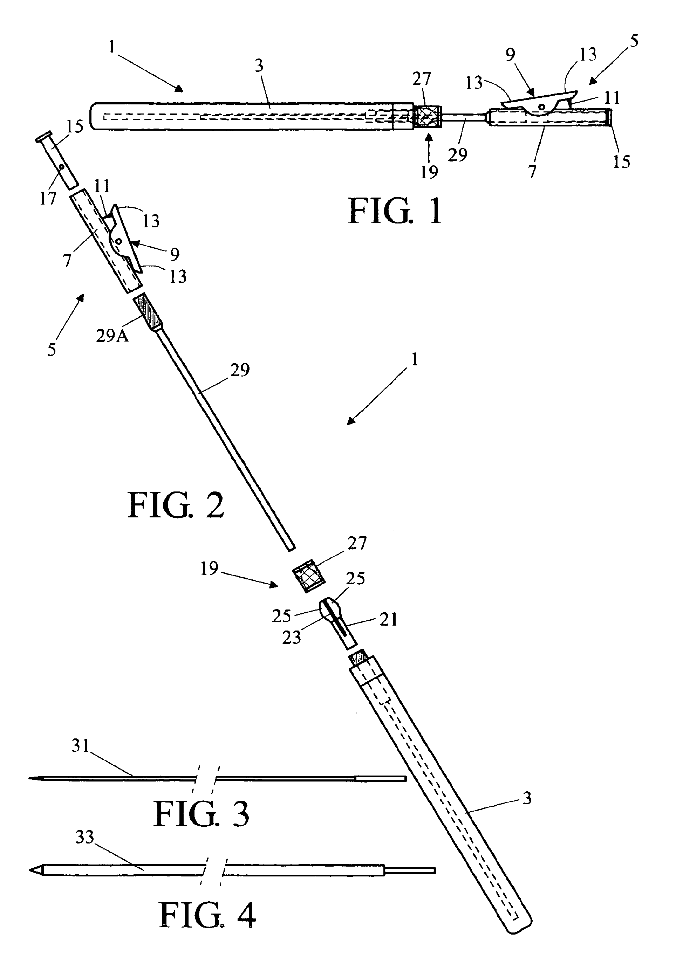

Figs. 1 and 2 show an embodiment of the appliance according to the invention as a compound unit and in fragmented form. The appliance is formed by a barbecue stick holder 1 provided with a handgrip 3 and holding means 5 connected thereto for holding the end of a barbecue stick.

The holding means 5 have a tube 7 into which the end of a barbecue stick can be stuck, as well as a lever 9 rotatably connected thereto which has at the end a pin 11 which can be pushed into the barbecue stick through a hole provided in the tube. The two ends of the lever have a pressure face 13 with which the pin can be easily pushed into the barbecue stick or pulled out of the barbecue stick.

The barbecue stick holder 1 further includes an insert sleeve 15 which has a hole 17 and is present in the tube, with the hole in the insert sleeve mating with the hole in the tube, so that the pin can be inserted through the two holes together.

The handgrip 3 is elongated and hollow and open at the end and includes clamping means 19. The clamping means include an adapter 21 which has slots 23 with lips 25 being formed between the slots. The clamping means further have a sleeve 27 turnable over the adapter which, when turned, presses the ends of the lips of the adapter together.

The barbecue stick holder 1 further includes a pin 29 which can be pushed into and drawn out of the handgrip and can be clamped by the clamping means 19, with the holding means 5 being tightened to the end 29A protruding from the handgrip.

The barbecue stick holder 1 further includes a spring (not shown) which is connected to the lever 9 and pushes same into a position so that the pin is pushed through the hole. As a result of the spring pressure the pin is always pushed into the barbecue stick so that the barbecue stick cannot drop from the appliance unintentionally.

The lever may have various shapes, for example the model of a car to give a more casual appearance to the barbecue stick holder.

Figs. 3 and 4 show a thin and a thick metal barbecue stick 31 and 33 respectively, which can be used with the barbecue stick holder.

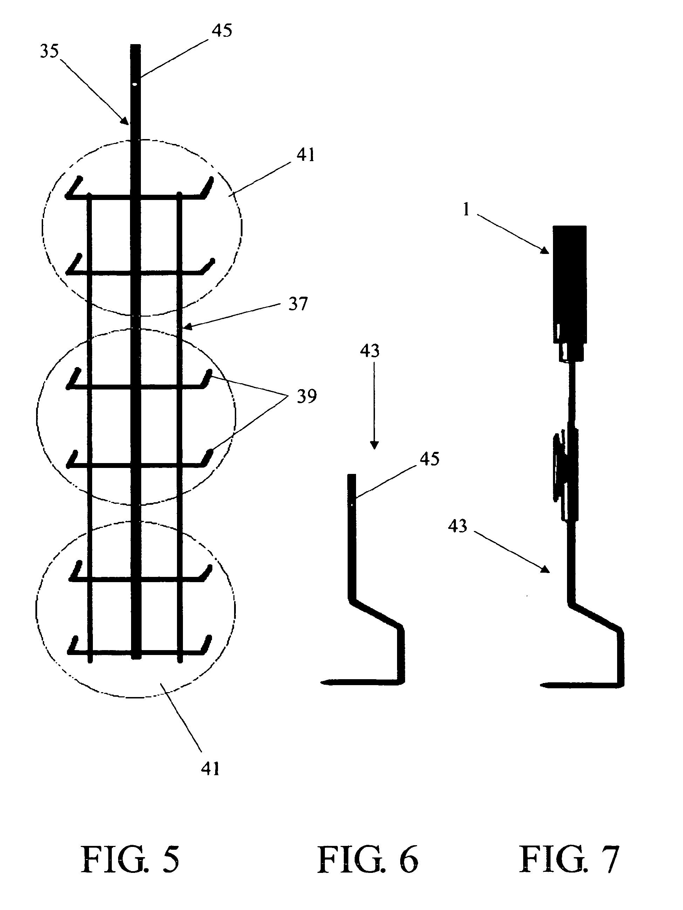

Fig. 5 shows a metal barbecue stick 35 provided with a grid 37 with protruding pins 39 to which hamburgers 41 are pinned down for illustrative purposes.

Fig. 6 shows a hook-shaped metal barbecue stick 43 from which for example a minced meat ball or a sausage may be suspended. The barbecue sticks 35 and 43 (and 31 and 33 as well) have a hole 45 through which the pin 11 can be stuck so as to hold the barbecue sticks. Fig. 7 shows by way of illustration a combination of the barbecue stick holder 1 and the hook-shaped barbecue stick 43.

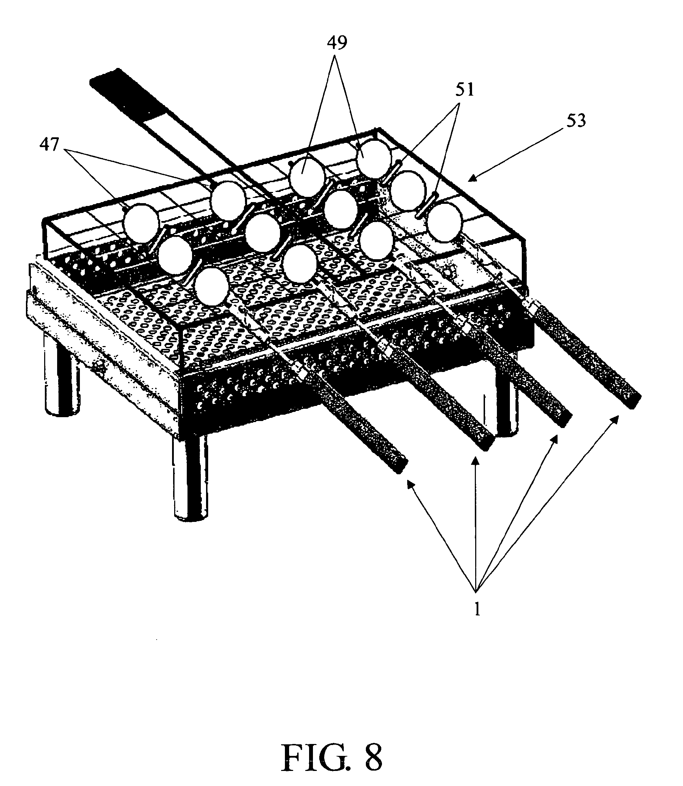

Finally, Fig. 8 shows a plurality of barbecue stick holders 1 during barbecuing. The barbecue stick holders 1 hold barbecue sticks 47 to which pieces of meat 49 and vegetables 51 are stuck. The barbecue sticks 47 are placed over the fire in the barbecue 53 and the barbecue stick holders 1 are positioned beside the barbecue, so that they can be easlily taken hold of for turning the sticks.

Albeit the invention has been described in the foregoing based on the drawing figures, it should be observed that the invention is not by any manner or means restricted to the embodiments shown in the drawing figures. The invention also extends to all embodiments deviating from the embodiment shown in the drawing figures within the scope defined by the claims.

## Claims

1. An appliance for barbecuing, comprising a barbecue stick holder (1), consisting of a handgrip (3) as well as holding means (5) connected thereto for holding the end of a barbecue stick, **characterised in that** the holding means (5) comprise a tube (7) into which the end of a barbecue stick can be stuck, as well as a pin (11) which can be pushed into the barbecue stick through a hole present in the tube.

2. An appliance as claimed in claim 1, **characterised in that** the pin is present at an end of a lever (9) which is rotatably connected to the tube and has a pressure face (13) at both ends, and **in that** the appliance comprises a spring that cooperates with the lever (9) and pushes it into a position in which the pin (11) is pushed through the hole.

3. An appliance as claimed in claim 1 or 2, **characterised in that** the appliance comprises an insert sleeve (15) with a hole (17) which sleeve can be inserted into the tube (7) so that the pin (11) can be stuck through the hole.

4. An appliance as claimed in any one of the preceding claims, **characterised in that** the handgrip (3) is elongated and hollow and is open at one end and provided with clamping means (19), and the appliance further includes a pin (29) which can be moved into and out of the handgrip and can be clamped by the clamping means while the holding means (5) are connected to the end of the pin (29) protruding from the handgrip (3).

5. An appliance as claimed in claim 4, **characterised in that** the clamping means (19) comprise a slotted adapter (21) with lips (25) being formed between the slots (23), as well as a sleeve (27) which can be turned around these lips and can, when turned, press the lips of the adapter together.

6. A combination of an appliance as claimed in claim 4 or 5 and a barbecue stick, **characterised in that** the barbecue stick (31; 33; 35; 43) is made of metal and can be clamped in the handgrip (3) by the clamping means (19).

7. A combination of an appliance as claimed in claim 4 or 5 and a barbecue stick, **characterised in that** the barbecue stick (31; 33; 35; 43) is made of metal and can be inserted into the tube (7) and has a hole (45) the pin (11) can be pushed through.

8. A combination as claimed in claim 6 or 7, **characterised in that** the metal barbecue stick (43) is hook-shaped so that it can be stuck transversely through a sausage in lieu of being stuck through the sausage in longitudinal direction.

9. A combination as claimed in claim 6 or 7, **characterised in that** the metal barbecue stick (35) has a grid (37) with protruding pins (39) to which for example hamburgers can be pinned down.

## Patentansprüche

1. Hilfsmittel für die Zubereitung von Grillspeisen, bestehend aus einem Grillstabhalter (1), der mit einem Griff (3) sowie mit damit verbundenen Haltemitteln (5) zur Fixierung eines Grillstab an dessen einer Seite versehen ist, **dadurch gekennzeichnet, dass** die Haltemittel (5) ein Rohr (7), in das ein Grillstab mit einer Seite eingesetzt werden kann, sowie einen Stift (11) umfassen, der durch ein in dem Rohr vorhandenes Loch in den Grillstab gesteckt werden kann.

2. Hilfsmittel nach Anspruch 1, **dadurch gekennzeichnet, dass** der Stift an einer Seite eines Hebels (9) angeordnet ist, der drehbar mit dem Rohr verbunden und auf beiden Seiten mit einer Druckfläche (13) versehen ist, und dass das Hilfsmittel eine Feder umfasst, die mit dem Hebel (9) zusammenwirkt und diesen in eine Stellung drückt, in der der Stift (11) durch das Loch gedrückt wird.

3. Hilfsmittel nach einem der Ansprüche 1 oder 2, **dadurch gekennzeichnet, dass** das Hilfsmittel eine mit einem Loch (17) versehene Einsatzhülse (15) umfasst, die in dem Rohr (7) angebracht werden kann, wobei der Stift (11) durch das Loch gesteckt werden kann.

4. Hilfsmittel nach einem der vorangegangenen Ansprüche, **dadurch gekennzeichnet, dass** der Griff (3) langgestreckt und hohl sowie auf einer Seite offen und mit Spannmitteln (19) versehen ist und das Hilfsmittel ferner eine Stange (29) umfasst, die in dem Griff verschoben und mit den Spannmitteln fixiert werden kann, wobei die Haltemittel (5) mit der aus dem Griff (3) hervorstehenden Seite der Stange (29) verbunden sind.

5. Hilfsmittel nach Anspruch 4, **dadurch gekennzeichnet, dass** die Spannmittel (19) eine Spannbuchse (21) umfassen, die mit Schlitzen (23) versehen ist, wobei zwischen den Schlitzen Lippen (25) ausgebildet sind, und ferner eine darüber aufzuschraubende Hülse (27) umfassen, die beim Aufschrauben dafür sorgt, dass die Lippen der Spannbuchse an den Spitzen zusammengedrückt werden.

6. Kombination aus einem Hilfsmittel nach einem der Ansprüche 4 oder 5 und einem Grillstab, **dadurch gekennzeichnet, dass** der Grillstab (31; 33; 35; 43) aus Metall besteht und sich mit den Spannmitteln (19) in dem Griff (3) festklemmen lässt.

7. Kombination aus einem Hilfsmittel nach einem der Ansprüche 4 oder 5 und einem Grillstab, **dadurch gekennzeichnet, dass** der Grillstab (31; 33; 35; 43) aus Metall besteht und in dem Rohr (7) angebracht werden kann und mit einem Loch (45) versehen ist, durch das der Stift (11) gedrückt werden kann.

8. Kombination nach einem der Ansprüche 6 oder 7, **dadurch gekennzeichnet, dass** der metallene Grillstab (43) hakenförmig ist und so quer durch eine Wurst gesteckt werden kann, anstatt dass er in Längsrichtung in die Wurst gesteckt werden muss.

9. Kombination nach einem der Ansprüche 6 oder 7, **dadurch gekennzeichnet, dass** der metallene Grillstab (35) ein Raster (37) mit hervorstehenden Spitzen (39) umfasst, um daran Hacksteaks aufspießen zu können.

## Revendications

1. Moyen d'aide pour faire un barbecue comprenant un porte-brochette de barbecue (1) pourvu d'une poignée (3) ainsi que des moyens de maintien (5) lui étant reliés pour maintenir en son extrémité une brochette de barbecue, **caractérisé en ce que** les moyens de maintien (5) comprennent un tube (7) dans lequel peut être insérée l'extrémité d'une brochette de barbecue, ainsi qu'une goupille (11) pouvant être enfoncée dans la brochette de barbecue à travers un trou présent dans le tube.

2. Moyen d'aide selon la revendication 1, **caractérisé en ce que** la goupille se trouve à une extrémité d'un levier (9) relié de manière pivotante au tube et pourvu en ses deux extrémités d'une surface de pression (13), et **en ce que** le moyen d'aide comprend un ressort travaillant de pair avec le levier (9) et comprimant celui-ci dans une position pour laquelle la goupille (11) est enfoncée dans le trou.

3. Moyen d'aide selon la revendication 1 ou 2, **caractérisé en ce que** le moyen d'aide comprend une douille taraudée (15) pourvue d'un trou (17) et pouvant être placée dans le tube (7), où la goupille (11) peut s'enfoncer dans le trou.

4. Moyen d'aide selon une des revendications précédentes, **caractérisé en ce que** la poignée (3) est allongée et creuse et est ouverte en une de ses extrémités et est pourvue de moyens de serrage (19), et **en ce que** le moyen d'aide comprend de plus une goupille (29) pouvant coulisser dans et hors de la poignée et pouvant être serrée par les moyens de serrage, où les moyens de maintien (5) sont reliés à l'extrémité de la goupille (29) qui sort de la poignée (3).

5. Moyen d'aide selon la revendication 4, **caractérisé en ce que** les moyens de serrage (19) comprennent une douille fendue (21), qui est pourvue d'entailles (23) entre lesquelles sont façonnées des lèvres (25), ainsi qu'un manchon (27) pivotant autour de celle-ci qui peut, en cas de torsion, comprimer l'une vers l'autre les extrémités des lèvres de la douille fendue.

6. Combinaison d'un moyen d'aide selon la revendication 4 ou 5 et d'une brochette de barbecue, **caractérisé en ce que** la brochette de barbecue (31;33;35;43) est en métal et peut être serrée dans la poignée (3) par les moyens de serrage (19).

7. Combinaison d'un moyen d'aide selon la revendication 4 ou 5 et d'une brochette de barbecue, **caractérisé en ce que** la brochette de barbecue (31;33;35;43) est en métal et peut être placée dans le tube (7) et est pourvue d'un trou (45) à travers lequel peut être enfoncée la goupille (11).

8. Combinaison selon la revendication 6 ou 7, **caractérisé en ce que** la brochette de barbecue en métal (43) est en forme de crochet et qu'on peut l'enfoncer ainsi transversalement dans une saucisse au lieu de devoir l'enfoncer dans le sens de la longueur.

9. Combinaison selon la revendication 6 ou 7, **caractérisé en ce que** la brochette de barbecue en métal (35) comprend une grille (37) ayant des pointes (39) saillantes afin de pouvoir y piquer des hamburgers.
